# EUROPEAN PATENT APPLICATION

(11) **EP 4 694 092 A1**
(43) Date of publication of application: **11.02.2026**
(21) Application number: 24802717.9
(22) Date of filing: 16.04.2024
(51) Int. Cl.: H04L 69/16

(54) **NETWORK ACCESS METHOD, AND COMPUTING DEVICE AND COMPUTING DEVICE CLUSTER**

(30) Priority: 05.05.2023 CN 202310497837; 31.07.2023 CN 202310954685
(71) Applicant: Huawei Cloud Computing Technologies Co., Ltd., Guiyang, Guizhou 550025 (CN)
(72) Inventor: GAO, Feng, Guiyang, Guizhou 550025 (CN)
(74) Representative: Goddar, Heinz J.
(86) International application number: PCT/CN2024/088116
(87) International publication number: WO 2024/230431

(57) **Abstract**

This application provides a network access method, a computing device, and a computing device cluster. In the method, a first socket creation request initiated by a target application is received, a type parameter of the first socket creation request is modified, and a socket is created based on a modified type parameter. A protocol stack corresponding to the modified type parameter is the same as a protocol stack supported by the second computing device. A first computing device receives a connection request initiated by the target application, and modifies a first IP address in the connection request to a second IP address based on a preset address mapping relationship. The second IP address is an IP address of a second computing device under a second protocol stack supported by the second computing device. The first computing device establishes a connection to the second computing device based on the socket and the connection request. According to the solutions, the first computing device may establish a connection to the second computing device based on an accurate IP address, to implement network access between computing devices under different protocol stacks.

## Description

### CROSS-REFERENCE TO RELATED APPLICATIONS

This application claims priority to Chinese Patent Application No. 202310497837.0, filed with the China National Intellectual Property Administration on May 5, 2023 and entitled "NETWORK ACCESS METHOD", and claims priority to Chinese Patent Application No. 202310954685.2, filed with the China National Intellectual Property Administration on July 31, 2023 and entitled "NETWORK ACCESS METHOD, COMPUTING DEVICE, AND COMPUTING DEVICE CLUSTER", which are incorporated herein by reference in their entireties.

### TECHNICAL FIELD

This application relates to the field of computer technologies, and in particular, to a network access method, a computing device, and a computing device cluster.

### BACKGROUND

With the development of the internet protocol (internet protocol, IP), internet protocol version 4 (internet protocol version 4, IPv4) addresses have been exhausted, and the internet protocol version 6 (internet protocol version 6, IPv6) has become a mainstream network protocol being promoted.

However, IPv4 networks have developed for decades, and a vast majority of services support only IPv4 without considering supporting IPv6. Therefore, to enable existing IPv4-based services to support IPv6, modifications need to be made to current massive services, making the implementation highly challenging. In addition, with the expansion of cloud services, a quantity of containers has far exceeded that of virtual machines. To meet address requirements of the containers, IPv6 addresses need to be assigned to the containers. However, most existing services are based on IPv4 addresses. Therefore, a technology that supports interoperability between IPv4 and IPv6 is required, to ensure normal running of current services.

However, in an existing network access method, to support IPv4 and IPv6 dual stacks, determining needs to be performed in code logic based on an address scenario, and existing code needs to be modified based on different protocol stack scenarios. This increases complexity of the code, and consequently causes difficulty in promoting IPv6.

### SUMMARY

This application provides a network access method, a computing device, and a computing device cluster, to implement mutual network access between devices supporting different protocol stacks.

According to a first aspect, this application provides a network access method. The method may be performed by a first computing device or a kernel mode of the first computing device. In the method, the first computing device receives a first socket creation request initiated by a target application. The first socket creation request is used to request to create a socket for accessing a target application in a second computing device. The first computing device modifies a type parameter of the first socket creation request, and creates a socket based on a modified type parameter. A protocol stack corresponding to the modified type parameter is the same as a protocol stack supported by the second computing device. The first computing device receives a connection request initiated by the target application, where the connection request is used to request to establish a connection to the second computing device, and the connection request includes a first internet protocol IP address; and modifies the first IP address in the connection request to a second IP address based on a preset address mapping relationship, where the first IP address belongs to a first protocol stack, and the second IP address is an IP address of the second computing device under a second protocol stack supported by the second computing device. The first computing device establishes a connection to the second computing device based on the socket and the connection request.

In the foregoing method, when receiving the socket creation request from the target application, the first computing device may modify a type parameter of the socket, to generate a socket that matches the protocol stack supported by the second computing device, and the first computing device modifies a peer IP address in the connection request initiated by the target application to an IP address of the second computing device under an actual protocol stack, to ensure that the first computing device can establish a connection to the second computing device based on an accurate IP address, thereby achieving network access from the first computing device to the second computing device.

In a possible design, after creating the socket based on the modified type parameter, and before receiving the connection request initiated by the target application, the method further includes: receiving an address binding request initiated by the target application, where the address binding request includes a third IP address; modifying the third IP address in the address binding request to a fourth IP address based on the preset address mapping relationship; and binding the fourth IP address to the socket according to the address binding request. The third IP address belongs to the first protocol stack, and the fourth IP address is an IP address of the first computing device under the second protocol stack.

Establishing the connection to the second computing device based on the socket and the connection request includes: establishing the connection to the second computing device based on the socket, the fourth IP address, and the second IP address in the connection request.

According to this design, after receiving the address binding request, the first computing device may modify a local IP address in the address binding request to a local IP address that belongs to the protocol stack supported by the second computing device, so that the first computing device may establish a connection to the second computing device based on a modified local IP address, thereby successfully accessing the second computing device.

In a possible design, after receiving the address binding request initiated by the target application, and before modifying the third IP address in the address binding request to the fourth IP address based on the preset address mapping relationship, the method further includes: determining that the preset address mapping relationship includes a mapping relationship between the third IP address and the fourth IP address.

According to this design, when determining that the preset address mapping relationship includes the mapping relationship between the third IP address and the fourth IP address, the first computing device may modify the third IP address in the address binding request based on the mapping relationship between the third IP address and the fourth IP address, to ensure accuracy of network address translation.

In a possible design, establishing the connection to the second computing device based on the socket and the connection request includes: selecting a fourth IP address from a plurality of IP addresses of the first computing device, where the fourth IP address and the second IP address belong to a same protocol stack; and establishing the connection to the second computing device based on the socket, the fourth IP address, and the second IP address in the connection request.

According to this design, if the first computing device does not receive the address binding request sent by the target application, the first computing device may select the fourth IP address when establishing the connection to the second computing device, and establish the connection to the second computing device based on the fourth IP address. The fourth IP address and the second IP address belong to a same protocol stack, so that a network connection can be correctly established, and accuracy of network access is ensured.

In a possible design, after receiving the first socket creation request initiated by the target application, and before modifying the type parameter of the first socket creation request, the method further includes: determining that the target application belongs to a preset application list. An application in the preset application list is an application for which network address translation is to be performed.

According to this design, an application list for which network address translation is to be performed may be prestored in the first computing device, so that the first computing device can monitor an application in the application list, and perform socket type conversion and network address translation in time.

In a possible design, the preset application list is preconfigured by a system or is customized by a user, and the preset address mapping relationship is preconfigured by the system or is customized by the user.

According to this design, the system may preconfigure an application for which network address translation is to be performed, or the user may select an application for which network address translation is to be performed. The preset address mapping relationship may also be preconfigured by the system or customized by the user, thereby improving flexibility of the network access method.

In a possible design, after receiving the connection request initiated by the target application, and before modifying the first IP address in the connection request to the second IP address based on the preset address mapping relationship, the method further includes: determining that the preset address mapping relationship includes a mapping relationship between the first IP address and the second IP address.

According to this design, when determining that the preset address mapping relationship includes the mapping relationship between the first IP address and the second IP address, the first computing device may modify the first IP address in the connection request based on the mapping relationship between the first IP address and the second IP address, to ensure accuracy of network address translation.

In a possible design, after establishing the connection to the second computing device based on the socket and the connection request, the method further includes: performing system call processing based on the second IP address. The system call processing includes reading a message from the second computing device and/or sending a message to the second computing device.

According to this design, based on the network access method provided in this application, a network connection between the first computing device and the second computing device can be correctly established, to implement message transmission between the first computing device and the second computing device.

In a possible design, the first protocol stack is an IPv4 protocol stack, and the second protocol stack is an IPv6 protocol stack; or the first protocol stack is an IPv6 protocol stack, and the second protocol stack is an IPv4 protocol stack.

According to this design, mutual network access between the first computing device and the second computing device in different protocol stacks can be implemented, which is beneficial to promotion and application of the IPv4 protocol.

According to a second aspect, this application provides a network access method. The method may be performed by a second computing device or a kernel mode of the second computing device. In the method, the second computing device receives a second socket creation request initiated by a target application, where the second socket creation request is used to request to create a socket for listening for a message sent by a target application in another device; and modifies a type parameter of the second socket creation request, and creates a socket based on a modified type parameter, where a protocol stack corresponding to the modified type parameter is the same as a protocol stack that is supported by a first computing device and that corresponds to the target application. The second computing device receives an address binding request initiated by the target application in the second computing device. The address binding request includes a first server internet protocol IP address. The second computing device modifies the first IP address in the address binding request to a second IP address based on a preset address mapping relationship. The first IP address belongs to a first protocol stack, the second IP address is an IP address of the second computing device under the second protocol stack, and the second protocol stack is the protocol stack that is supported by the first computing device and that corresponds to the target application. The second computing device binds the socket to the second IP address according to the address binding request.

In the foregoing method, when receiving the socket creation request from the target application, the second computing device may modify a type parameter of the socket, to generate a socket that matches the protocol stack of the first computing device, and the second computing device modifies a local IP address in the address binding request initiated by the target application to an IP address under the protocol stack supported by the first computing device, to ensure that the second computing device can receive network access from the first computing device based on an accurate IP address.

In a possible design, after receiving the second socket creation request initiated by the target application, and before modifying the type parameter of the second socket creation request, the method further includes: determining that the target application belongs to a preset application list. An application in the preset application list is an application for which network address translation is to be performed.

In a possible design, the preset application list is preconfigured by a system or is customized by a user, and the preset address mapping relationship is preconfigured by the system or is customized by the user.

In a possible design, after receiving the address binding request initiated by the target application in the second computing device, and before modifying the first IP address in the address binding request to the second IP address based on the preset address mapping relationship, the method further includes: determining that the preset address mapping relationship includes a mapping relationship between the first IP address and the second IP address.

In a possible design, after binding the socket to the second IP address according to the address binding request, the method further includes: performing system call processing based on the second IP address. The system call processing includes reading a message from the first computing device of the target application and/or sending a message to the first computing device of the target application.

In a possible design, the first protocol stack is an IPv4 protocol stack, and the second protocol stack is an IPv6 protocol stack; or the first protocol stack is an IPv6 protocol stack, and the second protocol stack is an IPv4 protocol stack.

According to a third aspect, this application provides a network access method. The method may be performed by a first computing device or a kernel mode of the first computing device. For example, the method may be performed by the first computing device. In the method, the first computing device receives a first socket creation request initiated by a target application. The first socket creation request is used to request to create a socket for accessing a target application in a second computing device. The first computing device creates a first socket according to the first socket creation request. The first computing device receives a connection request initiated by the target application in the first computing device. The connection request is used to request to establish a connection to the second computing device, the connection request includes a first server internet protocol IP address, and the first IP address belongs to a first protocol stack. The first computing device determines that a preset address mapping relationship includes a mapping relationship between the first IP address and a second IP address. The second IP address is an IP address of the second computing device under a second protocol stack supported by the second computing device. The first computing device closes the first socket, and generates a third socket creation request. An index of the third socket creation request is the same as an index of the first socket creation request, a type parameter of the third socket creation request is different from a type parameter of the first socket creation request, and a protocol stack corresponding to the type parameter of the third socket creation request is the same as a protocol stack supported by the second computing device. The first computing device creates a second socket according to the third socket creation request. The first computing device modifies the first IP address in the connection request to the second IP address based on the preset address mapping relationship. A protocol stack to which the second IP address belongs is the same as the protocol stack supported by the second computing device. The first computing device establishes a connection to the second computing device based on the second socket and the connection request.

In the foregoing method, when the first computing device supports dual stacks, the first computing device determines that the preset address mapping relationship includes a destination IP address to which the connection request requests to connect, and then generates a new socket creation request and translates an IP address of the second computing device, to ensure that the first computing device can accurately identify a service for which network address translation is to be performed, and establish a connection to the second computing device based on an accurate IP address.

In a possible design, before generating the third socket creation request, the method further includes: determining that the target application belongs to a preset application list. An application in the preset application list is an application for which network address translation is to be performed.

In a possible design, the preset application list is preconfigured by a system or is customized by a user, and the preset address mapping relationship is preconfigured by the system or is customized by the user.

In a possible design, after establishing the connection to the second computing device based on the second socket and the connection request, the method further includes: performing system call processing based on the second IP address. The system call processing includes reading a message from the second computing device and/or sending a message to the second computing device.

In a possible design, generating the third socket creation request includes: sequentially generate socket creation requests according to an index order until the third socket creation request is generated.

According to this design, because a kernel always assigns a process with a smallest index in current processes, the first computing device may sequentially generate socket creation requests until the third socket creation request with the same index as the first socket creation request is generated, so that a normal service of the target application is not affected, and a normal network access service is ensured.

According to a fourth aspect, this application provides a computing device. The computing device includes: a kernel network module, configured to receive a first socket creation request initiated by a target application, where the first socket creation request is used to request to create a socket for accessing a target application in a second computing device; and a conversion module, configured to modify a type parameter of the first socket creation request, where a protocol stack corresponding to a modified type parameter is the same as a protocol stack supported by the second computing device. The kernel network module is further configured to: create a socket based on the modified type parameter; and receive a connection request initiated by the target application. The connection request is used to request to establish a connection to the second computing device, the connection request includes a first internet protocol IP address, and the first IP address belongs to a first protocol stack. The conversion module is further configured to modify the first internet protocol IP address in the connection request to a second IP address based on a preset address mapping relationship. The second IP address is an IP address of the second computing device under a second protocol stack supported by the second computing device. The kernel network module is further configured to establish a connection to the second computing device based on the socket and the connection request.

In a possible design, the kernel network module is further configured to: after creating the socket based on the modified type parameter, and before receiving the connection request initiated by the target application, receive an address binding request initiated by the target application. The address binding request includes a third IP address, and the third IP address belongs to the first protocol stack. The conversion module is further configured to modify the third IP address in the address binding request to a fourth IP address based on the preset address mapping relationship. The fourth IP address is an IP address of the first computing device under the second protocol stack. The kernel network module is further configured to bind the fourth IP address to the socket according to the address binding request. When establishing the connection to the second computing device based on the socket and the connection request, the kernel network module is specifically configured to: establish the connection to the second computing device based on the socket, the fourth IP address, and the second IP address in the connection request.

In a possible design, the conversion module is further configured to: after receiving the address binding request initiated by the target application, and before modifying the third IP address in the address binding request to the fourth IP address based on the preset address mapping relationship, determine that the preset address mapping relationship includes a mapping relationship between the third IP address and the fourth IP address.

In a possible design, the kernel network module is specifically configured to: select a fourth IP address from a plurality of IP addresses of the first computing device, where the fourth IP address and the second IP address belong to a same protocol stack; and establish the connection to the second computing device based on the socket, the fourth IP address, and the second IP address in the connection request.

In a possible design, the conversion module is further configured to: after receiving the first socket creation request initiated by the target application, and before modifying the type parameter of the first socket creation request, determine that the target application belongs to a preset application list. An application in the preset application list is an application for which network address translation is to be performed.

In a possible design, the conversion module is further configured to: before modifying the first server internet protocol IP address in the connection request to the second IP address based on the preset address mapping relationship, determine that the preset address mapping relationship includes a mapping relationship between the first IP address and the second IP address.

In a possible design, the kernel network module is further configured to: after establishing the connection to the second computing device based on the socket and the connection request, perform system call processing based on the second IP address. The system call processing includes reading a message from the second computing device and/or sending a message to the second computing device.

In a possible design, the first IP address and the third IP address belong to an IPv4 protocol stack, and the second IP address and the fourth IP address belong to an IPv6 protocol stack; or the first IP address and the third IP address belong to an IPv6 protocol stack, and the second IP address and the fourth IP address belong to an IPv4 protocol stack.

According to a fifth aspect, this application provides a computing device. The computing device includes: a kernel network module, configured to receive a second socket creation request initiated by a target application, where the second socket creation request is used to request to create a socket for listening for a message sent by a target application in another device; and a conversion module, configured to modify a type parameter of the second socket creation request, where a protocol stack corresponding to a modified type parameter is the same as a protocol stack that is supported by a first computing device and that corresponds to the target application. The kernel network module is further configured to: create a socket based on the modified type parameter; and receive an address binding request initiated by the target application. The address binding request includes a first server internet protocol IP address. The conversion module is further configured to modify the first IP address in the address binding request to a second IP address based on a preset address mapping relationship. The first IP address belongs to a first protocol stack, the second IP address is an IP address of the second computing device under the second protocol stack, and the second protocol stack is the protocol stack that is supported by the first computing device and that corresponds to the target application. The kernel network module is further configured to bind the socket to the second IP address according to the address binding request.

In a possible design, the conversion module is further configured to: after receiving the second socket creation request initiated by the target application, and before modifying the type parameter of the second socket creation request, determine that the target application belongs to a preset application list. An application in the preset application list is an application for which network address translation is to be performed.

In a possible design, the conversion module is further configured to: after receiving the address binding request initiated by the target application, and before modifying the first IP address in the address binding request to the second IP address based on the preset address mapping relationship, determine that the preset address mapping relationship includes a mapping relationship between the first IP address and the second IP address.

In a possible design, the kernel network module is further configured to: after binding the socket to the second IP address according to the address binding request, perform system call processing based on the second IP address. The system call processing includes reading a message from the first computing device of the target application and/or sending a message to the first computing device of the target application.

In a possible design, the first IP address belongs to an IPv4 protocol stack, and the second IP address belongs to an IPv6 protocol stack; or the first IP address belongs to an IPv6 protocol stack, and the second IP address belongs to an IPv4 protocol stack.

According to a sixth aspect, this application provides a computing device. The computing device includes: a kernel network module, configured to: receive a first socket creation request initiated by a target application, where the first socket creation request is used to request to create a socket for accessing a target application in a second computing device; create a first socket according to the first socket creation request; receive a connection request initiated by the target application, where the connection request is used to request to establish a connection to the second computing device, the connection request includes a first server internet protocol IP address, and the first IP address belongs to a first protocol stack; determine that a preset address mapping relationship includes a mapping relationship between the first IP address and a second IP address, where the second IP address is an IP address of the second computing device under a second protocol stack supported by the second computing device; close the first socket, and generate a third socket creation request, where an index of the third socket creation request is the same as an index of the first socket creation request, a type parameter of the third socket creation request is different from a type parameter of the first socket creation request, and a protocol stack corresponding to the type parameter of the third socket creation request is the same as a protocol stack supported by the second computing device; and create a second socket according to the third socket creation request; and a conversion module, configured to modify the first IP address in the connection request to the second IP address based on the preset address mapping relationship, where a protocol stack to which the second IP address belongs is the same as the protocol stack supported by the second computing device. The kernel network module is further configured to establish a connection to the second computing device based on the second socket and the connection request.

In a possible design, the conversion module is further configured to: before generating the third socket creation request, determine that the target application belongs to a preset application list. An application in the preset application list is an application for which network address translation is to be performed.

In a possible design, the kernel network module is further configured to: after establishing the connection to the second computing device based on the second socket and the connection request, perform system call processing based on the second IP address. The system call processing includes reading a message from the second computing device and/or sending a message to the second computing device.

In a possible design, the kernel network module is specifically configured to: sequentially generate socket creation requests according to an index order until the third socket creation request is generated.

According to a seventh aspect, this application provides a computing device. The device includes a processor and a memory. The processor is configured to execute instructions stored in the memory, so that the computing device performs the method according to any one of the first aspect and the possible designs of the first aspect, or performs the method according to any one of the second aspect and the possible designs of the second aspect, or performs the method according to any one of the third aspect and the possible designs of the third aspect.

According to an eighth aspect, this application provides a computing device cluster. The computing device cluster includes at least one computing device, and each computing device includes a processor and a memory. The processor of the at least one computing device is configured to execute instructions stored in the memory of the at least one computing device, so that the computing device cluster performs the method according to any one of the first aspect and the possible designs of the first aspect, or performs the method according to any one of the second aspect and the possible designs of the second aspect, or performs the method according to any one of the third aspect and the possible designs of the third aspect.

According to a ninth aspect, this application provides a computer program product including instructions. When the instructions are run by a computing device, the computing device is enabled to perform the method according to any one of the first aspect and the possible designs of the first aspect, or perform the method according to any one of the second aspect and the possible designs of the second aspect, or perform the method according to any one of the third aspect and the possible designs of the third aspect.

According to a tenth aspect, this application provides a computer-readable storage medium, including computer program instructions. When the computer program instructions are executed by a computing device, the computing device performs the method according to any one of the first aspect and the possible designs of the first aspect, or performs the method according to any one of the second aspect and the possible designs of the second aspect, or performs the method according to any one of the third aspect and the possible designs of the third aspect.

Based on the implementations provided in the foregoing aspects, embodiments of this application may be further combined to provide more implementations. For beneficial effects of the fourth aspect to the tenth aspect, refer to descriptions of beneficial effects of the first aspect to the third aspect. Details are not described herein again.

### BRIEF DESCRIPTION OF DRAWINGS

FIG. 1 is a diagram of an architecture of a NAT64 technology;
FIG. 2 is a diagram of an architecture of a communication system that can implement network address translation;
FIG. 3 is a diagram of a structure of a computing apparatus according to an embodiment of this application;
FIG. 4 is a flowchart of a network access method according to an embodiment of this application;
FIG. 5A and FIG. 5B are a flowchart of a network access method according to an embodiment of this application;
FIG. 6 is a flowchart of a network access method according to an embodiment of this application;
FIG. 7A and FIG. 7B are a flowchart of a network access method according to an embodiment of this application;
FIG. 8 is a flowchart of a network access method according to an embodiment of this application;
FIG. 9A and FIG. 9B are a flowchart of a network access method according to an embodiment of this application;
FIG. 10 is a diagram of a structure of a computing device according to an embodiment of this application;
FIG. 11 is a diagram of a computing device cluster according to an embodiment of this application; and
FIG. 12 is a diagram of a connection manner of a computing device cluster according to an embodiment of this application.

### DESCRIPTION OF EMBODIMENTS

To make objectives, technical solutions, and advantages of embodiments of this application clearer, the following further describes embodiments of this application in detail with reference to the accompanying drawings. The terms "first" and "second" below in descriptions of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

It should be understood that in embodiments of this application, "at least one" means one or more, and "plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of a plurality of items. For example, at least one of a, b, or c may represent: a, b, c, a and b, a and c, b and c, or a, b and c, where a, b, and c may be a singular or plural number.

The transmission control protocol (transmission control protocol/internet protocol, TCP/IP) is the most basic communication protocol used in networks. The TCP/IP transmission protocol defines standards and methods for communication between different parts across the internet.

An internet protocol address (Internet Protocol Address, IP) is a uniform address format provided by the IP protocol. Based on the IP protocol, an IP address may be assigned to each network and each host on the Internet, so that all hosts connected to the network can communicate with each other based on their own IP addresses and IP addresses of receiving hosts.

The internet protocol version 4 (internet protocol version 4, IPv4) uses 32-bit addresses and provides about 4.3 billion addresses. However, with the development of internet protocol (internet protocol, IP), IPv4 addresses have been exhausted, and the internet protocol version 6 (internet protocol version 6, IPv6) becomes a mainstream network protocol being promoted. IPv6 uses 128-bit addresses and can provide almost unlimited addresses.

However, IPv4 networks have developed for decades, and a vast majority of services support only IPv4 without considering supporting IPv6. Therefore, to enable existing IPv4-based services to support IPv6, modifications need to be made to current massive services, making the implementation highly challenging. In addition, with the expansion of cloud services, a quantity of containers has far exceeded that of virtual machines. To meet address requirements of the containers, IPv6 addresses need to be assigned to the containers. However, most existing services are based on IPv4 addresses. Therefore, a technology that supports interoperability between IPv4 and IPv6 is required, to ensure normal running of current services.

However, in an existing network access method, to support IPv4 and IPv6 dual stacks, determining needs to be performed in code logic based on an address scenario, and existing code needs to be modified based on different protocol stack scenarios. This increases complexity of the code, and consequently causes difficulty in promoting IPv6.

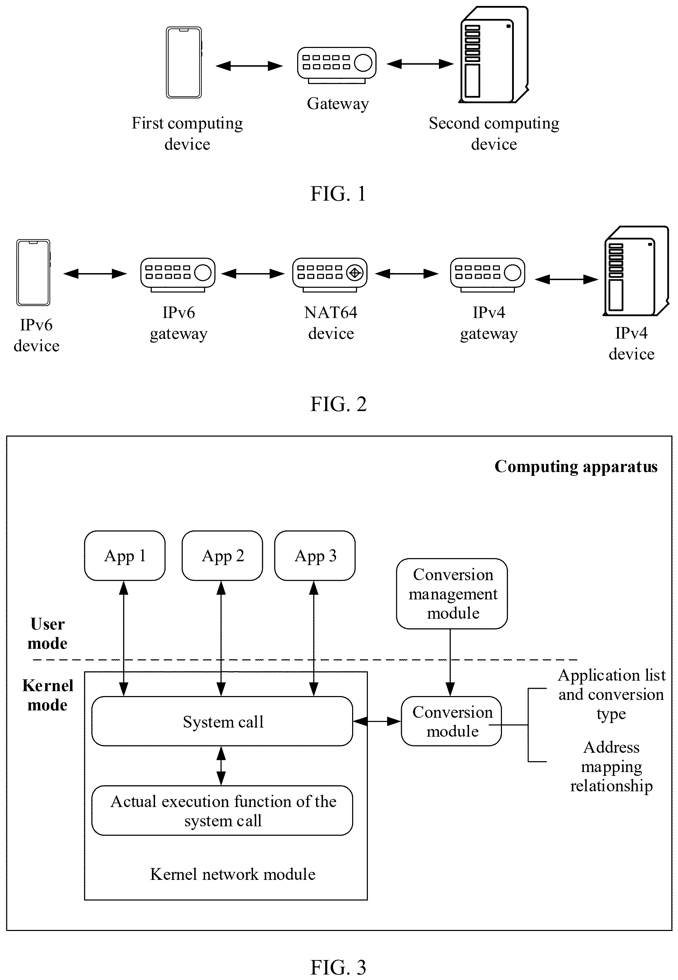

FIG. 1 is a diagram of a communication system. Refer to FIG. 1. The communication system may include a plurality of computing devices and gateways. A quantity of computing devices in the communication system is not limited in embodiments of this application. A first computing device, a gateway, and a second computing device in FIG. 1 are merely used as an example instead of a limitation.

In embodiments of this application, the computing device is any electronic device that requires network access (that is, access to an IPv4 public network or an IPv6 public network), for example, may be a device such as a computer, a notebook computer, a smartphone, a tablet computer, or a smart wearable device, or may be a server, or may be another home device, or may be a computing instance such as a virtual machine or a container. FIG. 1 shows an example in which the first computing device is a terminal and the second computing device is a server. A type of the computing device is not limited in this embodiment of this application. In this embodiment of this application, an application may be installed on the computing device. The application in the computing device may be a client, or may be a server. The client may request to access a server, the client may further request to access another client, and the server may listen for an access request initiated by the client. In the following descriptions, an example in which an application in the first computing device accesses an application in the second computing device is used for description.

An application may be installed on the first computing device. When a user uses a network service provided by the application, the first computing device may perform data exchange with the second computing device based on the IP address of the first computing device and the IP address of the second computing device, to complete the service. IPv4 is used as an example. An IPv4-based IP address has 32 bits. IPv4 divides the 32-bit address into two parts: a first part represents a network address, and a latter part represents an address of a host in a local area network. If two IP addresses are in a same subnet, network addresses are definitely the same. To determine a network address in an IP address, the IP protocol also introduces a subnet mask. The network address can be obtained by performing a bitwise AND operation on the IP address and subnet mask. When the first computing device sends a data packet to the second computing device, the first computing device may first determine, by using the IPv4 protocol, whether the first computing device and the second computing device are in a same subnet. If the first computing device and the second computing device are in the same subnet, the first computing device may query a media access control (media access control, MAC) address by using an address resolution protocol (address resolution protocol, ARP), so that the first computing device may send the data packet to the second computing device in the subnet in a broadcast form. If the first computing device and the second computing device are not in the same subnet, the Ethernet may forward the data packet to a gateway of the subnet for routing. The gateway may perform forwarding a plurality of times until the data packet is forwarded to a subnet in which the second computing device is located, then obtain the MAC address of the second computing device by using the ARP, and finally send the data packet to the second computing device in a broadcast form.

In the IPv4 protocol, when the first computing device needs to send a data packet to the second computing device, the first computing device performs the following steps.

Step a: Create a socket whose type parameter is IPv4.

Step b: Bind a local IPv4 address.

Step c: Connect to an IPv4 address of the second computing device end.

Similarly, in the IPv6 protocol, when the first computing device needs to send a data packet to the second computing device, the first computing device performs the following steps.

Step a: Create a socket whose type parameter is IPv6.

Step b: Bind a local IPv6 address.

Step c: Connect to an IPv6 address of the second computing device end.

The socket (Socket) in the foregoing procedure may be considered as an endpoint in a communication connection of two applications on different hosts when the two applications communicate with each other, which is a logical concept. The socket is equivalent to an application programming interface (application programming interface, API) for inter-process communication in a network environment, and is a communication endpoint that can be named and addressed. Each socket has its type and a process connected to it. The socket is a mechanism based on an IP address and a port, used for transmitting a data packet to an application layer process.

In different IP protocol versions, a data packet transmitted between the first computing device and the second computing device needs to be routed by different gateways. For example, an IPv4 gateway is required in IPv4 to route the data packet, and an IPv6 gateway is required in IPv6 to route the data packet. How to implement mutual network access between devices in different protocol stacks becomes an extremely important topic at present.

In an optional implementation, a network address translation (network address translation, NAT) device may be deployed on an intermediate node of the IPv6 network and the IPv4 network, for example, a NAT64 device (also referred to as a NAT46 device) that supports network address translation between IPv6 and IPv4.

For example, FIG. 2 is a diagram of an architecture of a communication system that can implement network address translation. FIG. 2 uses interaction between the first computing device supporting IPv6 and the second electronic device supporting IPv4 as an example. Refer to FIG. 2. The communication system includes an IPv6 device, an IPv6 gateway, a NAT64 device, an IPv4 gateway, and an IPv4 device. It is assumed that an IP address of the IPv6 device is fe80::fbaf:32c5:ac97:0102, and an IP address of the IPv4 device is 192.168.1.1. The NAT64 device has a dual-stack capability of supporting both IPv6 and IPv4, and the NAT64 device has two network addresses. To implement translation between IPv6 and IPv4 addresses, the following correspondences need to be configured on the NAT64 device: an IPv6 address fe80::fbaf:32c5:ac97:0102 of the IPv6 device corresponds to an IPv4 address 192.168.2.2; and an IPv4 address 192.168.1.1 of the IPv4 device corresponds to an IPv6 address fe80::fbaf:32c5:ac98:0304.

When the IPv6 device needs to send a data packet to a server, both a source address and a destination address of the data packet are IP addresses under IPv6, the source address of the data packet is fe80::fbaf:32c5:ac97:0102, and the destination address of the data packet is fe80::fbaf:32c5:ac98:0304. After being forwarded by the IPv6 gateway, the data packet is received by the NAT64 device. The NAT64 device queries the preconfigured network address correspondences, and determines that both the source address and the destination address of the data packet have corresponding IPv4 addresses. Therefore, the NAT64 modifies the source address of the data packet to 192.168.2.2 and modifies the destination address to 192.168.1.1. After the network address is modified, the data packet can be forwarded to the IPv4 device through the IPv4 gateway.

Similarly, when the IPv4 device sends a data packet to the IPv6 device, the NAT64 device may modify a source address and a destination address of the data packet to an IPv6 address corresponding to the IPv4 address, thereby implementing transmission of the data packet from the IPv4 device to the IPv6 device.

However, although the foregoing solution can implement mutual access between the IPv4 network and the IPv6 network, a new device needs to be introduced into the communication system, which increases complexity of service deployment. In addition, data packet forwarding through the NAT64 device also increases a delay, and performance of the NAT64 device may also affect service performance.

Based on the foregoing problem, this application provides a network access method. The method may be performed by the first computing device and the second computing device. In the network access method provided in embodiments of this application, the first computing device receives a first socket creation request initiated by a target application. The first socket creation request is used to request to create a socket for accessing a target application in the second computing device. The first computing device may modify a type parameter of the first socket creation request, and create a socket based on a modified type parameter. A protocol stack corresponding to the modified type parameter is the same as a protocol stack supported by the second computing device. The first computing device receives a connection request initiated by the target application. The connection request is used to request to establish a connection to the second computing device, the connection request includes a first IP address, and the first IP address belongs to a first protocol stack. The first computing device may modify the first IP address in the connection request to a second IP address based on a preset address mapping relationship. The second IP address is an IP address of the second computing device under a second protocol stack supported by the second computing device. The first computing device may establish a connection to the second computing device based on the created socket and the connection request. In this solution, when receiving the socket creation request from the target application, the first computing device may modify a type parameter of the socket, to generate a socket that matches the protocol stack of the second computing device, and the first computing device modifies a peer IP address in the connection request initiated by the target application to an IP address of the second computing device under an actual protocol stack, to ensure that the first computing device can establish a connection to the second computing device based on an accurate IP address.

In another network access method provided in embodiments of this application, the first computing device may support the IPv4 protocol and the IPv6 protocol. In the method, the first computing device receives a first socket creation request initiated by a target application in the first computing device, and creates a first socket based on the first socket creation request. The first computing device receives a connection request sent by the target application. The first computing device determines that a preset address mapping relationship includes a mapping relationship between a first IP address in the connection request and a second IP address. The first IP address belongs to a first protocol stack, and the second IP address is an IP address of a second computing device under a second protocol stack supported by the second computing device. In this case, the first computing device may determine that network address translation needs to be performed on the connection request. The first computing device may close the first socket, and generate a third socket creation request. An index of the third socket creation request is the same as an index of the first socket creation request, and a type parameter of a third socket matches a protocol stack of the second computing device. The first computing device creates a second socket according to the third socket creation request, and modifies the first IP address in the connection request to the second IP address based on the preset mapping relationship. A protocol stack to which the second IP address belongs is the same as the protocol stack supported by the second computing device. The first computing device may establish a connection to the second computing device based on the second socket and the connection request. In this solution, when the first computing device supports dual stacks, the first computing device determines that the preset address mapping relationship includes a destination IP address to which the connection request requests to connect, and then generates a new socket creation request and translates an IP address of the second computing device, to ensure that the first computing device can accurately identify a service for which network address translation is to be performed, and establish a connection to the second computing device based on an accurate IP address.

The following describes a structure of a computing apparatus provided in an embodiment of this application. The computing apparatus may be the first computing device or the second computing device. FIG. 3 is a diagram of a structure of a computing apparatus according to an embodiment of this application. Refer to FIG. 3. At least one application may be installed on the computing apparatus. As shown in FIG. 3, an example in which a user mode includes three applications (an app 1, an app 2, and an app 3) is used. A kernel network module in a kernel mode is configured to execute a system call and an actual system call execution function, so that the kernel network module may be configured to: in response to a system call request initiated by an application, establish a connection to a second computing device; and send a data packet to the second computing device or receive a data packet sent by the second computing device.

The network access method provided in embodiments of this application may be performed by a conversion module in the computing apparatus. As shown in FIG. 3, the conversion management module may be configured to deliver an application list that needs to be monitored, a conversion type, and an address mapping relationship to the conversion module. Optionally, a user may set an application list that needs to be monitored, and the user may configure an address translation relationship; or the application list that needs to be monitored and the address translation relationship may be preconfigured by a system. The conversion module may store the application list that needs to be monitored and the conversion type, and store the preset address mapping relationship.

It is assumed that the application list that needs to be monitored includes the app 1. When receiving the system call request initiated by the app 1, the kernel network module of the computing apparatus may send a context related to the system call request to the conversion module. The conversion module may modify a type parameter of a socket creation request, and modify a destination address in a connection request. The conversion module may return a processed socket creation request and connection request to the kernel network module. The kernel network module then creates a socket according to the processed socket creation request, and establishes a connection to a remote end according to the modified connection request, to implement mutual network access between devices under different protocol stacks without affecting an original data processing procedure and a data receiving and sending procedure.

In some embodiments, the network access method provided in this embodiment of this application may be further used to enable the computing device to support another IP protocol. For example, it is assumed that the first computing device supports IPv4, the user may enable a "support IPv6" function on a control interface of the first computing device, and the first computing device loads the conversion module and the conversion management module shown in FIG. 3. When loading the conversion module, the first computing device may register detection information of a socket interface with a kernel. The conversion management module assigns an IPv6 address to the first computing device, and delivers the preset application list, the conversion type, and the preset address mapping relationship to the conversion module. In this way, the first computing device can access the IPv6 second computing device based on the network access method provided in this embodiment of this application, so that the first computing device supports different protocol stacks.

The mutual network access method provided in embodiments of this application may be applied to a first computing device or a second computing device that supports a single stack, or may be applied to a first computing device that supports dual stacks. The following further describes the mutual network access method in different protocol stack scenarios.

### 1. Single-stack scenario

The single-stack scenario in embodiments of this application means that the first computing device supports an IPv4 protocol and the second computing device supports an IPv6 protocol in an initial state, or the first computing device supports the IPv6 protocol and the second computing device supports the IPv4 protocol in an initial state.

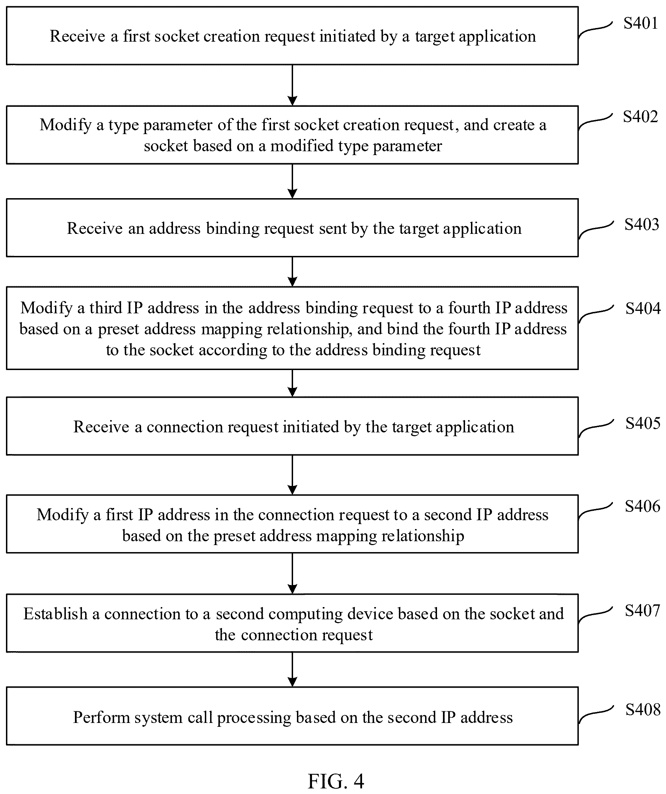

FIG. 4 is a flowchart of a network access method according to an embodiment of this application. The method may be performed by a first computing device or a kernel mode of the first computing device. In this embodiment, the first computing device receives a request initiated by a target application, and accesses a target application in a second computing device. Refer to FIG. 4. The method includes the following steps.

S401: Receive a first socket creation request initiated by the target application.

The first socket creation request is used to request to create a client socket for network communication.

The target application is an application in a preconfigured application list stored in the first computing device. An application in the preconfigured application list resides on a different protocol stack from that of the second computing device to which the application requests to connect. The first computing device needs to monitor a system call request initiated by the target application, to perform socket type conversion and network address translation.

S402: Modify a type parameter of the first socket creation request, and create a socket based on a modified type parameter.

In an optional implementation, after receiving the first socket creation request, the first computing device may query the preset application list to determine whether the target application is included. An application in the preset application list is an application for which network address translation is to be performed. After determining that the target application belongs to the preset application list, the first computing device modifies the type parameter of the first socket creation request, and creates the socket based on the modified type parameter.

The first socket creation request initiated by the target application includes the type parameter of the first socket creation request. The first computing device may modify the type parameter of the first socket creation request. A protocol stack corresponding to the modified type parameter is the same as a protocol stack supported by the second computing device. For example, it is assumed that the target application is an IPv4 application, the type parameter of the first socket creation request is AF_INET, and the second computing device supports IPv6. In this case, the first computing device may modify the type parameter of the first socket creation request to AF_INET6. For another example, it is assumed that the target application is an IPv6 application, the type parameter of the first socket creation request is AF_INET6, and the second computing device supports IPv4. In this case, the first computing device may modify the type parameter of the first socket creation request to AF_INET.

The first computing device may create the socket based on the modified type parameter. For example, when the modified type parameter is AF_INET6, the first computing device may create an IPv6 socket; or when the modified type parameter is AF_INET, the first computing device may create an IPv4 socket. According to this design, the first computing device may generate a socket that matches the protocol stack supported by the second computing device, to ensure that the first computing device can subsequently correctly access the second computing device based on the socket.

S403: Receive an address binding request sent by the target application.

Optionally, the address binding request sent by the target application is used to request to bind a local IP address of the first computing device. In this embodiment of this application, the address binding request sent by the target application includes a third IP address, and the third IP address belongs to a first protocol stack. The target application may obtain the third IP address from a configuration file, and generate the address binding request based on the obtained third IP address. Optionally, the third IP address may be an address of the first computing device under the first protocol stack; or the third IP address may be any IP address under the first protocol stack. In other words, the third IP address in the address binding request may not be an actual address of the first computing device.

In an optional implementation, after receiving the address binding request from the target application, the first computing device may determine whether a preset address mapping relationship includes a mapping relationship between the third IP address and a fourth IP address, and after determining that the preset address mapping relationship includes the mapping relationship between the third IP address and the fourth IP address, perform S404.

S404: Modify the third IP address in the address binding request to the fourth IP address based on the preset address mapping relationship, and bind the fourth IP address to the socket according to the address binding request.

In an optional implementation, the first computing device may store the preset address mapping relationship. For example, the first protocol stack and a second protocol stack are IPv4 and IPv6. The address mapping relationship may include an IPv4 address and an IPv6 address that correspond to the first computing device, and may further include an IPv4 address and an IPv6 address that correspond to the second computing device. In this embodiment of this application, an IP address under another protocol stack may be assigned to the first computing device. For example, if the first computing device supports IPv4 in an initial state, an IP address under IPv6 may be assigned to the first computing device, and a mapping relationship between the IPv4 address and the IPv6 address of the first computing device is stored.

In some embodiments, when initiating the address binding request, the target application in the first computing device may obtain the third IP address of the first computing device from the configuration file. If the third IP address in the configuration file is a preconfigured fake address under the first protocol stack, a mapping relationship between the fake address and an actual address of the first computing device under the second protocol stack may be stored in the address mapping relationship. If the third IP address in the configuration file is an actual address of the first computing device under the first protocol stack, a mapping relationship between the actual address of the first computing device under the first protocol stack and the actual address of the first computing device under the second protocol stack may be stored in the address mapping relationship.

The first computing device may modify the third IP address in the address binding request to the fourth IP address based on the preset address mapping relationship. The fourth IP address is an IP address of the first computing device under the second protocol stack, and a protocol stack to which the fourth IP address belongs is the same as the protocol stack supported by the second computing device. For example, it is assumed that the target application is an IPv4 application, the third IP address is an IPv4 address, and the second computing device supports IPv6. In this case, the fourth IP address after modification by the first computing device is an IPv6 address of the first computing device. For another example, it is assumed that the target application is an IPv6 application, the third IP address is an IPv6 address, and the second computing device supports IPv4. In this case, the fourth IP address after modification by the first computing device is an IPv4 address of the first computing device.

The first computing device may bind the fourth IP address to the socket according to the address binding request with address modification.

According to this design, after receiving the address binding request, the first computing device may modify a local IP address in the address binding request to a local IP address under the protocol stack supported by the second computing device, so that the first computing device may bind a modified local IP address to the socket, thereby successfully accessing the second computing device based on the socket.

It should be noted that during specific implementation, S403 and S404 are optional steps, and the target application may not initiate the address binding request. In this case, when establishing a connection to the second computing device, the first computing device may select a fourth IP address from a plurality of IP addresses of the first computing device. A protocol to which the fourth IP address belongs is the same as a protocol supported by the second computing device.

S405: Receive a connection request initiated by the target application.

The connection request initiated by the target application is used to request the first computing device to establish a connection to the second computing device. The connection request includes a first IP address, and the first IP address belongs to the first protocol stack. The target application may obtain the first IP address from the configuration file, and generate the connection request based on the obtained first IP address. Optionally, the first IP address may be any IP address under the first protocol stack. In other words, the first IP address in the connection request may not be an actual address of the second computing device.

In an optional implementation, after receiving the connection request from the target application, the first computing device may determine whether the preset address mapping relationship includes a mapping relationship between the first IP address and a second IP address. The second IP address is an IP address of the second computing device under the second protocol stack supported by the second computing device. After it is determined that the preset address mapping relationship includes the mapping relationship between the first IP address and the second IP address, S406 is performed.

S406: Modify the first IP address in the connection request to the second IP address based on the preset address mapping relationship.

It can be learned from the foregoing descriptions that when a protocol stack supported by the first computing device is different from the protocol stack supported by the second computing device, and the IP address of the second computing device in the connection request is not an actual IP address of the second computing device, the first computing device needs to modify the IP address of the second computing device in the connection request. In this embodiment of this application, the first computing device may modify the first IP address in the connection request to the second IP address based on the preset address mapping relationship. A protocol to which the first IP address belongs is the same as a protocol supported by the first computing device, and a protocol stack to which the first IP address belongs is the first protocol stack. A protocol to which the second IP address belongs is the same as the protocol supported by the second computing device, and the second IP address is an IP address of the second computing device under the second protocol stack.

For example, it is assumed that the target application is an IPv4 application, the first IP address in the connection request is an IPv4 address, and the second computing device supports IPv6. In this case, the second IP address after modification by the first computing device is an IPv6 address. For another example, it is assumed that the target application is an IPv6 application, the first IP address in the connection request is an IPv6 address, and the second computing device supports IPv4. In this case, the second IP address after modification by the first computing device is an IPv4 address.

According to this design, the first computing device may modify a peer IP address in the connection request initiated by the target application to an IP address of the second computing device under an actual protocol stack, to ensure that the first computing device can establish a connection to the second computing device based on an accurate IP address, thereby achieving network access from the first computing device to the second computing device.

S407: Establish a connection to the second computing device based on the socket and the connection request.

In an optional implementation, the first computing device may establish a connection to the second computing device based on the socket created based on the modified type parameter, and based on the fourth IP address and the second IP address in the connection request.

S408: Perform system call processing based on the second IP address.

Optionally, the system call processing includes reading a message from the second computing device and/or sending a message to the second computing device.

According to the network access method provided in this embodiment of this application, when receiving the socket creation request from the target application, the first computing device may modify a type parameter of the socket, to generate a socket that matches the protocol stack of the second computing device, and the first computing device modifies a destination IP address in the connection request initiated by the target application to an IP address of the second computing device under an actual protocol stack, to ensure that the first computing device can establish a connection to the second computing device based on an accurate IP address.

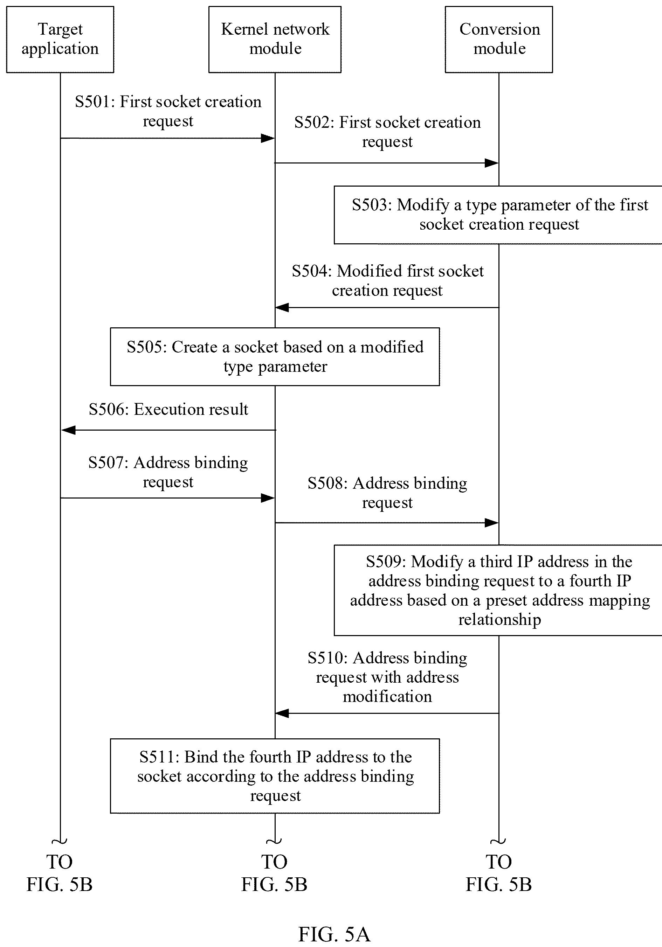

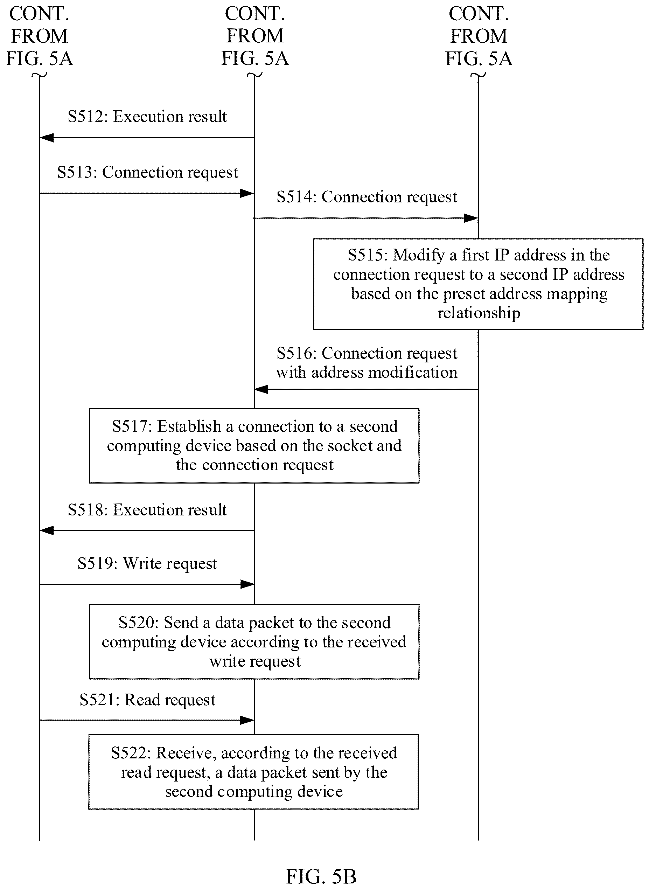

Based on the structure of the computing apparatus shown in FIG. 3, the following further describes the network access method provided in embodiments of this application from a perspective of interaction between modules in the first computing device. FIG. 5A and FIG. 5B are a flowchart of a network access method according to an embodiment of this application. The method may be performed by a target application, a kernel network module, and a conversion module in a first computing device. Refer to FIG. 5A and FIG. 5B. The method includes the following steps.

S501: The target application sends a first socket creation request to the kernel network module.

The first socket creation request is used to request to create a socket for accessing a target application in a second computing device. For example, the target application is an IPv6 application, and a type parameter of the first socket creation request is AF_INET6.

S502: The kernel network module sends the first socket creation request to the conversion module.

Optionally, after receiving the first socket creation request, and before modifying the type parameter of the first socket creation request, the conversion module may determine whether the target application belongs to a preset application list. After it is determined that the preset application list includes the target application, S503 is performed.

S503: The conversion module modifies the type parameter of the first socket creation request.

For example, if the target application is an IPv6 application, and the second computing device supports IPv4, the conversion module may modify the type parameter of the first socket creation request from AF_INET6 to AF_INET.

S504: The conversion module sends a modified first socket creation request to the kernel network module.

S505: The kernel network module creates a socket based on a modified type parameter.

S506: The kernel network module returns an execution result to the target application.

S507: The target application sends an address binding request to the kernel network module.

Optionally, the address binding request sent by the target application is used to request to bind an IP address of the first computing device. For example, a third IP address included in the address binding request is FE80::1234::2.

S508: The kernel network module sends the address binding request to the conversion module.

Optionally, after receiving the address binding request, the conversion module may determine whether a preset address mapping relationship includes a mapping relationship between the third IP address and a fourth IP address. After it is determined that the preset address mapping relationship includes the mapping relationship between the third IP address and the fourth IP address, S509 is performed.

S509: The conversion module modifies the third IP address in the address binding request to the fourth IP address based on the preset address mapping relationship.

For example, the conversion module modifies the third IP address FE80::1234::2 in the binding request to the fourth IP address 192.168.1.2.

S510: The conversion module sends the address binding request with address modification to the kernel network module.

S511: The kernel network module binds the fourth IP address to the socket according to the address binding request.

S512: The kernel network module returns an execution result to the target application.

S513: The target application sends a connection request to the kernel network module.

Optionally, the connection request sent by the target application is used to request the first computing device to establish a connection to the second computing device. For example, a first IP address included in the connection request is FE80::1234::1:80.

S514: The kernel network module sends the connection request to the conversion module.

Optionally, after receiving the connection request, the conversion module may determine whether the preset address mapping relationship includes a mapping relationship between the first IP address and a second IP address. After it is determined that the preset address mapping relationship includes the mapping relationship between the first IP address and the second IP address, S515 is performed.

S515: The conversion module modifies the first IP address in the connection request to the second IP address based on the preset address mapping relationship.

For example, the conversion module modifies the first IP address FE80::1234::1:80 in the binding request to the second IP address 192.168.1.1.

S516: The conversion module sends the connection request with address modification to the kernel network module.

S517: The kernel network module establishes a connection to the second computing device based on the socket and the connection request.

S518: The kernel network module returns an execution result to the target application.

S519: The target application sends a write request to the kernel network module.

S520: The kernel network module sends a data packet to the second computing device according to the received write request.

S521: The target application sends a read request to the kernel network module.

S522: The kernel network module receives, according to the received read request, a data packet sent by the second computing device.

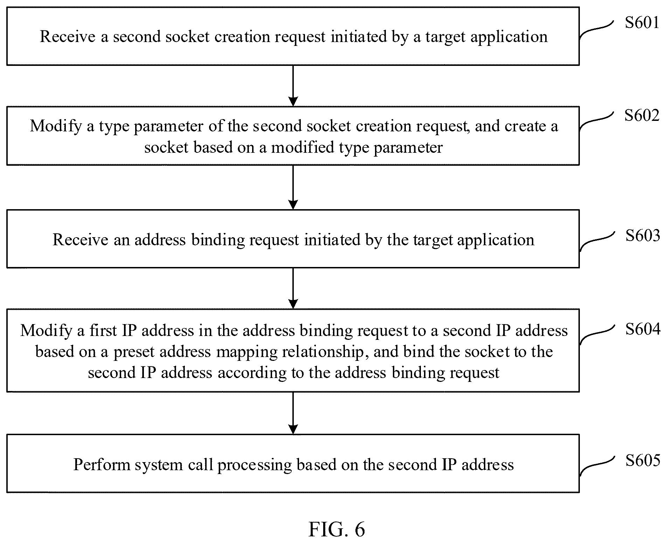

FIG. 6 is a flowchart of a network access method according to an embodiment of this application. The method may be executed by a second computing device or a kernel mode of the second computing device. In this embodiment, the second computing device may listen for a message sent by a target application in another device. Refer to FIG. 6. The method includes the following steps.

S601: Receive a second socket creation request initiated by a target application.

Optionally, the second socket creation request is used to request to create a socket for listening for a message sent by a target application in another device.

S602: Modify a type parameter of the second socket creation request, and create a socket based on a modified type parameter.

The second socket creation request includes the type parameter of the second socket creation request, and the second computing device may modify the type parameter of the second socket creation request. For example, if the type parameter of the second socket creation request is AF_INET, and the target application is an IPv6 application, the second computing device may modify the type parameter of the second socket creation request to AF_INET6. For another example, if the type parameter of the second socket creation request is AF_INET6, and the target application is an IPv4 application, the second computing device may modify the type parameter of the second socket creation request to AF_INET.

The second computing device may create the socket based on the modified type parameter. For example, when the modified type parameter is AF_INET6, the second computing device may create an IPv6 socket; or when the modified type parameter is AF_INET, the second computing device may create an IPv4 socket.

S603: Receive an address binding request initiated by the target application.

The address binding request is used to request to bind an IP address of the second computing device. In this embodiment of this application, the address binding request includes a first IP address, and the first IP address belongs to a first protocol stack. The target application may obtain the first IP address from a configuration file, and generate the address binding request based on the obtained first IP address. Optionally, the first IP address may be an address of the second computing device under the first protocol stack; or the first IP address may be any IP address under the first protocol stack. In other words, the first IP address in the address binding request may not be an actual address of the second computing device.

In an optional implementation, after receiving the address binding request from the target application, the second computing device may determine whether a preset address mapping relationship includes a mapping relationship between the first IP address and a second IP address, and after determining that the preset address mapping relationship includes the mapping relationship between the first IP address and the second IP address, perform S604.

S604: Modify the first IP address in the address binding request to the second IP address based on the preset address mapping relationship, and bind the socket to the second IP address according to the address binding request.

In an optional implementation, the second computing device may store the preset address mapping relationship. For example, the first protocol stack and a second protocol stack are IPv4 and IPv6. The address mapping relationship may include an IPv4 address and an IPv6 address of the second computing device. In this embodiment of this application, an IP address under another protocol stack may be assigned to the second computing device. For example, if the second computing device supports IPv4 in an initial state, an IP address under IPv6 may be assigned to the second computing device, and a mapping relationship between the IPv4 address and the IPv6 address of the second computing device is stored.

In some embodiments, when initiating the address binding request, the target application in the second computing device may obtain the first IP address of the second computing device from the configuration file. If the first IP address in the configuration file is a preconfigured fake address under the first protocol stack, a mapping relationship between the fake address and an actual address of the second computing device under the second protocol stack may be stored in the address mapping relationship. If the first IP address in the configuration file is an actual address of the second computing device under the first protocol stack, a mapping relationship between the actual address of the second computing device under the first protocol stack and the actual address of the second computing device under the second protocol stack may be stored in the address mapping relationship.

The second computing device may modify the first IP address in the address binding request to the second IP address based on the preset address mapping relationship. The second IP address is an IP address of the second computing device under the second protocol stack. For example, it is assumed that the first IP address in the address binding request is an IPv4 address, and the target application is an IPv6 application. In this case, the second IP address after modification by the second computing device is an IPv6 address of the second computing device. For another example, it is assumed that the first IP address in the address binding request is an IPv6 address, and the target application is an IPv4 application. In this case, the second IP address after modification by the second computing device is an IPv4 address of the second computing device.

The second computing device may bind the socket to the second IP address according to a modified address binding request, so that the second computing device can listen for a message whose destination address is the second IP address, to ensure that the second computing device can successfully receive network access initiated by the first computing device.

S605: Perform system call processing based on the second IP address.

Optionally, the system call processing includes reading a message from the first computing device of the target application and/or sending a message to the first computing device of the target application.

According to the network access method provided in this embodiment of this application, when receiving the socket creation request from the target application, the second computing device may modify a type parameter of the socket, to generate a socket that matches a protocol stack of the first computing device, and the second computing device modifies a server IP address in the binding request initiated by the target application to an IP address under the protocol stack of the first computing device, to ensure that the second computing device can interact with the first computing device of the target application.

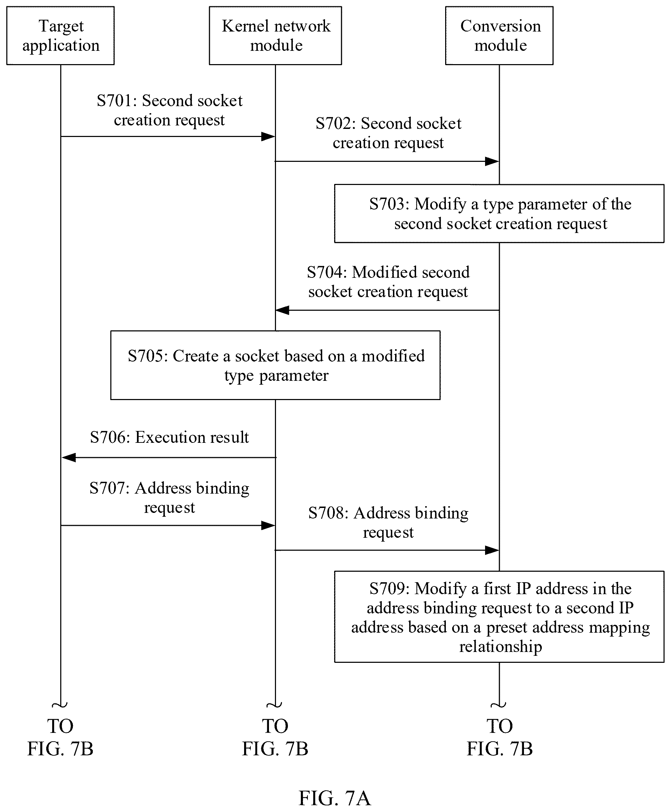

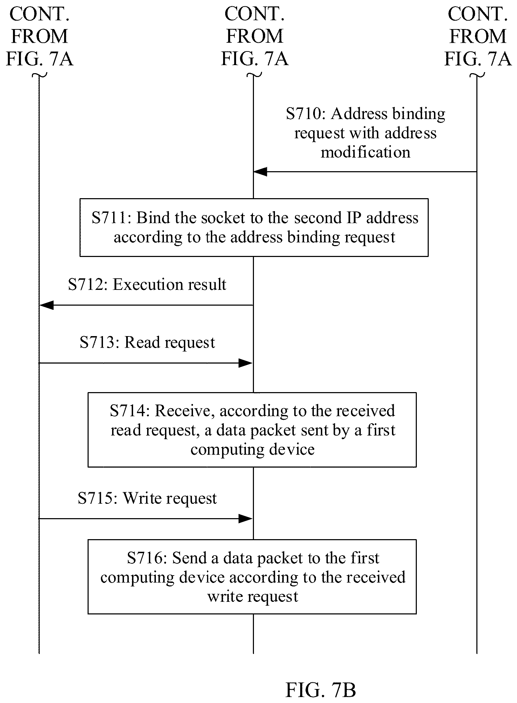

Based on the structure of the computing apparatus shown in FIG. 3, the following further describes the network access method provided in embodiments of this application from a perspective of interaction between modules in the second computing device. FIG. 7A and FIG. 7B are a flowchart of a network access method according to an embodiment of this application. The method may be performed by a target application, a kernel network module, and a conversion module in a second computing device. Refer to FIG. 7A and FIG. 7B. The method includes the following steps.

S701: The target application sends a second socket creation request to the kernel network module.

The second socket creation request is used to request to create a socket for listening for a message sent by a target application in another device. For example, the second computing device supports IPv4, and a type parameter of the second socket creation request is AF_INET.

S702: The kernel network module sends the second socket creation request to the conversion module.

Optionally, after receiving the second socket creation request, and before modifying the type parameter of the second socket creation request, the conversion module may determine whether the target application belongs to a preset application list. After it is determined that the preset application list includes the target application, S703 is performed.

S703: The conversion module modifies the type parameter of the second socket creation request.

For example, if the second computing device supports IPv4, and the target application is an IPv6 application, the conversion module may modify the type parameter of the second socket creation request from AF_INET to AF_INET6.

S704: The conversion module sends a modified second socket creation request to the kernel network module.

S705: The kernel network module creates a socket based on a modified type parameter.

S706: The kernel network module returns an execution result to the target application.

S707: The target application sends an address binding request to the kernel network module.

Optionally, the address binding request sent by the target application is used to request to bind an IP address of the second computing device. For example, a first IP address included in the address binding request is 192.168.1.1.

S708: The kernel network module sends the address binding request to the conversion module.

Optionally, after receiving the address binding request, the conversion module may determine whether a preset address mapping relationship includes a mapping relationship between the first IP address and a second IP address. After it is determined that the preset address mapping relationship includes the mapping relationship between the first IP address and the second IP address, S709 is performed.

S709: The conversion module modifies the first IP address in the address binding request to the second IP address based on the preset address mapping relationship.

For example, the conversion module modifies the first IP address 192.168.1.1 in the binding request to a fourth IP address FE80::1234::1.

S710: The conversion module sends the address binding request with address modification to the kernel network module.

S711: The kernel network module binds the socket to the second IP address according to the address binding request.

S712: The kernel network module returns an execution result to the target application.

S713: The target application sends a read request to the kernel network module.

S714: The kernel network module receives, according to the received read request, a data packet sent by the first computing device.

S715: The target application sends a write request to the kernel network module.

S716: The kernel network module sends a data packet to the first computing device according to the received write request.

### 2. Dual-stack scenario

The dual-stack scenario in embodiments of this application is that the first computing device supports an IPv4 protocol and an IPv6 protocol in an initial state.

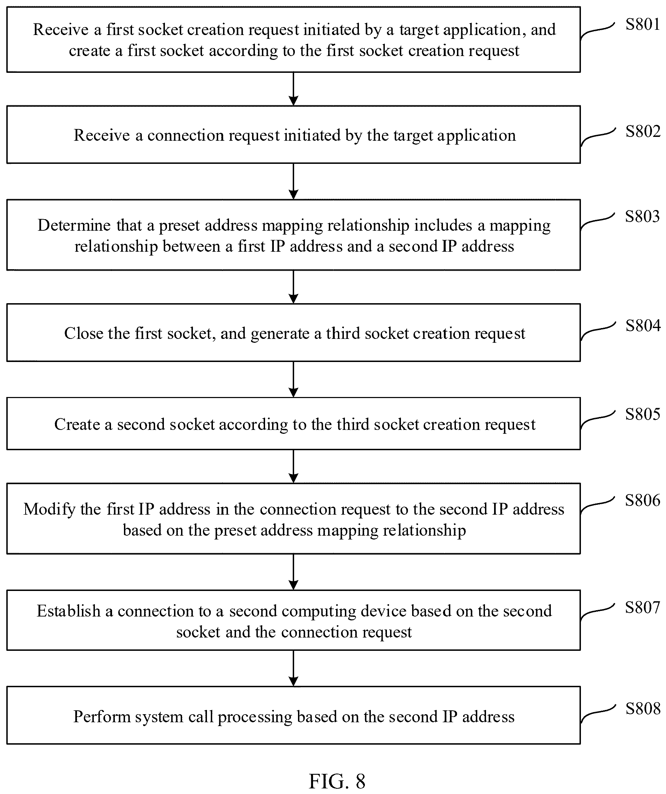

FIG. 8 is a flowchart of a network access method according to an embodiment of this application. The method may be performed by a first computing device or a kernel mode of the first computing device. In this embodiment, the first computing device receives a request initiated by a target application, and accesses a target application in a second computing device. Refer to FIG. 8. The method includes the following steps.

S801: Receive a first socket creation request initiated by the target application, and create a first socket according to the first socket creation request.

The first socket creation request is used to request to create a socket for accessing the target application in the second computing device.

The target application is an application in a preconfigured application list stored in the first computing device. An application in the preconfigured application list may reside on a different protocol stack from that of the second computing device to which the application requests to connect. The first computing device needs to monitor a system call request initiated by the target application. In this embodiment, the first computing device supports IPv4 and IPv6 dual stacks. Therefore, when receiving the first socket creation request initiated by the target application, the first computing device cannot determine an IP address of the second computing device to which the target application requests to connect, and consequently cannot determine whether socket type conversion and network address translation need to be performed. The first computing device needs to wait until the first computing device receives a connection request initiated by the target application, to determine, based on the IP address of the second computing device in the connection request, whether socket type conversion and network address translation need to be performed.

S802: Receive the connection request initiated by the target application.

The connection request is used to request to establish a connection to the second computing device, and the connection request includes a first IP address. The first IP address belongs to a first protocol stack. The target application may obtain the first IP address from a configuration file, and generate the connection request based on the obtained first IP address. Optionally, the first IP address may be any IP address under the first protocol stack. In other words, the first IP address in the connection request may not be an actual address of the second computing device.

S803: Determine that a preset address mapping relationship includes a mapping relationship between the first IP address and a second IP address.

In an optional implementation, the first computing device stores the preset address mapping relationship. When receiving the connection request, the first computing device may obtain the first IP address in the connection request, and query whether the preset address mapping relationship includes the mapping relationship between the first IP address and the second IP address. The second IP address is an IP address of the second computing device under a second protocol stack supported by the second computing device. If the preset address mapping relationship includes the mapping relationship between the first IP address and the second IP address, it indicates that the first computing device needs to translate the address in the connection request.

S804: Close the first socket, and generate a third socket creation request.

Optionally, the first computing device may close the first socket created in S801, and generate the third socket creation request. An index of the third socket creation request is the same as an index of the first socket creation request, and a type parameter of the third socket creation request is different from a type parameter of the first socket creation request.

In an optional implementation, during creation of socket creation requests, because a kernel always assigns a process with a smallest index in current processes, the first computing device needs to sequentially generate socket creation requests according to an index order until the third socket creation request with the same index as the first socket creation request is generated. After generating the third socket creation request, the first computing device may close another useless socket creation request. In addition, the type parameter of the third socket creation request generated by the first computing device is different from the type parameter of the first socket creation request, and a protocol stack corresponding to the type parameter of the third socket creation request is the same as a protocol stack supported by the second computing device. For example, when the type parameter of the first socket creation request is AF_INET, the type parameter of the third socket creation request is AF_INET6; or when the type parameter of the first socket creation request is AF_INET6, the type parameter of the third socket creation request is AF_INET.

Optionally, the index of the socket creation request in this embodiment of this application may be a file descriptor.

S805: Create a second socket according to the third socket creation request.

In this embodiment of this application, the type parameter of the third socket creation request generated by the first computing device is different from the type parameter of the first socket creation request, and a protocol stack corresponding to the third socket creation request is the same as the protocol stack supported by the second computing device. The first computing device may create the second socket according to the third socket creation request, to ensure that a protocol stack corresponding to a type parameter of the second socket is the protocol stack supported by the second computing device. In this way, the first computing device can perform network access to the second computing device based on the second socket.

S806: Modify the first IP address in the connection request to the second IP address based on the preset address mapping relationship.

In this embodiment of this application, the first computing device may modify the first IP address in the connection request to the second IP address based on the preset address mapping relationship. The second IP address is an IP address of the second computing device under the second protocol stack.

For example, it is assumed that the target application is an IPv4 application, the first IP address in the connection request is an IPv4 address, and the second computing device supports IPv6. In this case, the second IP address after modification by the first computing device is an IPv6 address. For another example, it is assumed that the target application is an IPv6 application, the first IP address in the connection request is an IPv6 address, and the second computing device supports IPv4. In this case, the second IP address after modification by the first computing device is an IPv4 address.

According to the network access method provided in this embodiment of this application, because the index of the third socket creation request is the same as the index of the first socket creation request, after generating the second socket and modifying the address in the connection request, the first computing device may continue a procedure of the original connection request based on the second socket and the second IP address in a modified connection request, to establish a connection to the second computing device and implement network access to the second computing device.

S807: Establish a connection to the second computing device based on the second socket and the connection request.

In an optional implementation, the first computing device may select a fourth IP address from a plurality of IP addresses of the first computing device. A protocol to which the fourth IP address belongs is the same as a protocol that is supported by the second computing device and that is of the target application. The first computing device may establish the connection to the second computing device based on the second socket, the fourth IP address, and the second IP address in the connection request.

S808: Perform system call processing based on the second IP address.

Optionally, the system call processing includes reading a message from the second computing device and/or sending a message to the second computing device.

According to the network access method provided in this embodiment of this application, when the first computing device supports dual stacks, the first computing device determines that the preset address mapping relationship includes a destination IP address to which the connection request requests to connect, and then generates a new socket creation request and translates an IP address of the second computing device, to ensure that the first computing device can accurately identify a service for which network address translation is to be performed, and establish a connection to the second computing device based on an accurate IP address.

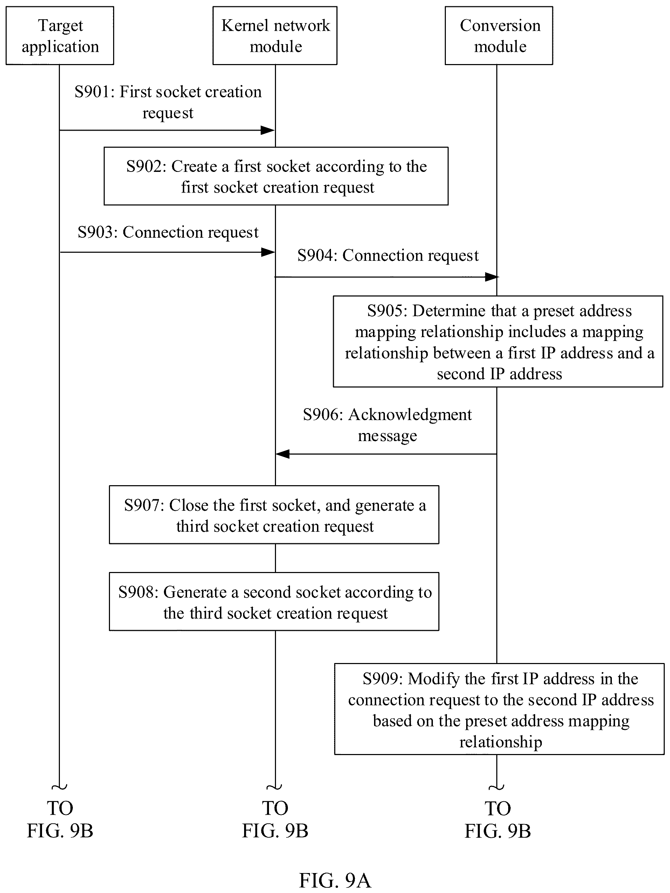

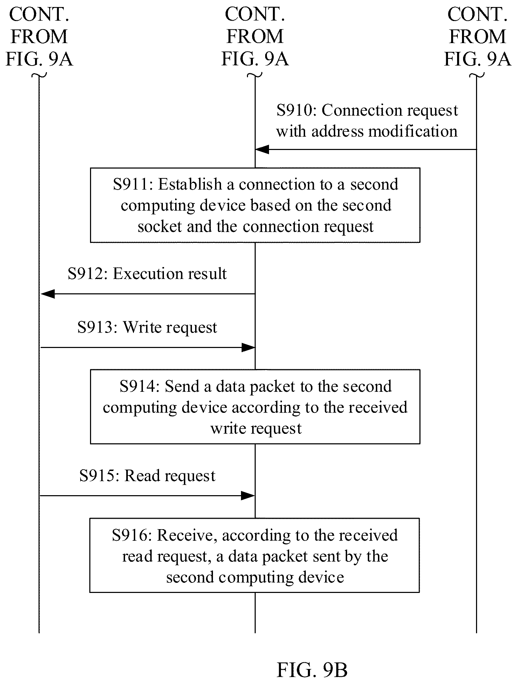

Based on the structure of the computing apparatus shown in FIG. 3, the following further describes the network access method provided in embodiments of this application from a perspective of interaction between modules in the first computing device. FIG. 9A and FIG. 9B are a flowchart of a network access method according to an embodiment of this application. The method may be performed by a target application, a kernel network module, and a conversion module in a first computing device. Refer to FIG. 9A and FIG. 9B. The method includes the following steps.

S901: The target application sends a first socket creation request to the kernel network module.

The first socket creation request is used to request to create a socket for accessing a target application in a second computing device. For example, the target application is an IPv6 application, and a type parameter of the first socket creation request is AF_INET6.

S902: The kernel network module creates a first socket according to the first socket creation request.

S903: The target application sends a connection request to the kernel network module.

Optionally, the connection request sent by the target application is used to request the first computing device to establish a connection to the second computing device. For example, a first IP address included in the connection request is 192.168.1.1.

S904: The kernel network module sends the connection request to the conversion module.

S905: The conversion module determines that a preset address mapping relationship includes a mapping relationship between the first IP address and a second IP address.

S906: The conversion module sends an acknowledgment message to the kernel network module.

S907: The kernel network module closes the first socket, and generates a third socket creation request.

An index of the third socket creation request is the same as an index of the first socket creation request, and a type parameter of the third socket creation request is different from a type parameter of the first socket creation request.

S908: The kernel network module generates a second socket according to the third socket creation request.

S909: The conversion module modifies the first IP address in the connection request to the second IP address based on the preset address mapping relationship.

For example, the conversion module modifies the first IP address 192.168.1.1 in a binding request to the second IP address FE80::1234::1:80.

S910: The conversion module sends the connection request with address modification to the kernel network module.

S911: The kernel network module establishes a connection to the second computing device based on the second socket and the connection request.

S912: The kernel network module returns an execution result to the target application.

S913: The target application sends a write request to the kernel network module.

S914: The kernel network module sends a data packet to the second computing device according to the received write request.

S915: The target application sends a read request to the kernel network module.

S916: The kernel network module receives, according to the received read request, a data packet sent by the second computing device.

In addition, in some embodiments, the network access method provided in embodiments of this application may be further applied to network access between devices having a plurality of IP addresses under a same IP protocol stack. For example, embodiments of this application may be further configured to implement network address translation between an IPv4 address and an IPv4 address, or network address translation between an IPv6 address and an IPv6 address. In this implementation, the conversion module also needs to prestore an address mapping relationship, and perform network address translation based on the address mapping relationship. For specific implementation, refer to the foregoing embodiments. Details are not described herein again.

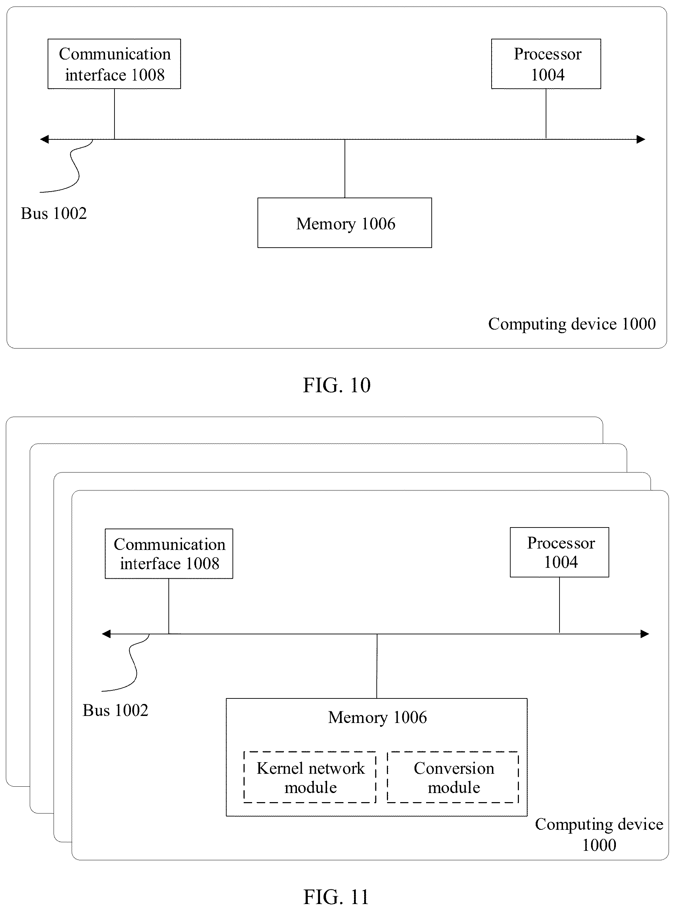

Based on the foregoing embodiments, this application further provides a computing device 1000. As shown in FIG. 10, the computing device 1000 includes a bus 1002, a processor 1004, a memory 1006, and a communication interface 1008. The processor 1004, the memory 1006, and the communication interface 1008 communicate with each other through the bus 1002. The computing device 1000 may be a second computing device or a first computing device, and may be configured to perform functions performed by the second computing device or the first computing device in the network access method provided in embodiments of this application. It should be understood that quantities of processors and memories in the computing device 1000 are not limited in this application.

The bus 1002 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 10, but it does not mean that there is only one bus or only one type of bus. The bus 1002 may include a path for transferring information between various components (for example, the memory 1006, the processor 1004, and the communication interface 1008) of the computing device 1000.

The processor 1004 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The processor 1004 may further include a non-volatile memory (non-volatile memory), for example, a read-only memory (read-only memory, ROM), a flash memory, a hard disk drive (hard disk drive, HDD), or a solid-state drive (solid-state drive, SSD). It should be noted that the memory in the methods described in this specification is intended to include but is not limited to these memories and any other memory of a proper type.

The memory 1006 stores executable program code, and the processor 1004 executes the executable program code to separately implement functions performed by the first computing device or the second computing device, to implement the network access method provided in embodiments of this application. In other words, the memory 106 stores instructions for performing the network access method. For example, the memory 1006 in the computing device 1000 stores instructions for executing functions of a kernel network module and a conversion module.

The communication interface 1008 uses a transceiver module, for example, but not limited to, a network interface card or a transceiver, to implement communication between the computing device 1000 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 11, the computing device cluster includes at least one computing device 1000. A memory 1006 in one or more computing devices 1000 in the computing device cluster may store same instructions for performing the methods provided in embodiments of this application.

In some possible implementations, the memory 1006 in the one or more computing devices 1000 in the computing device cluster may alternatively separately store some instructions for performing the methods provided in embodiments of this application. In other words, a combination of the one or more computing devices 1000 may jointly execute instructions for performing the methods provided in embodiments of this application.

It should be noted that memories 1006 in different computing devices 1000 in the computing device cluster may store different instructions respectively used for performing some functions performed by the first computing device or the second computing device in the foregoing method embodiments. In other words, instructions stored in the memories 1006 in different computing devices 1000 may implement functions of one or more modules in the first computing device, or implement functions of one or more modules in the second computing device.

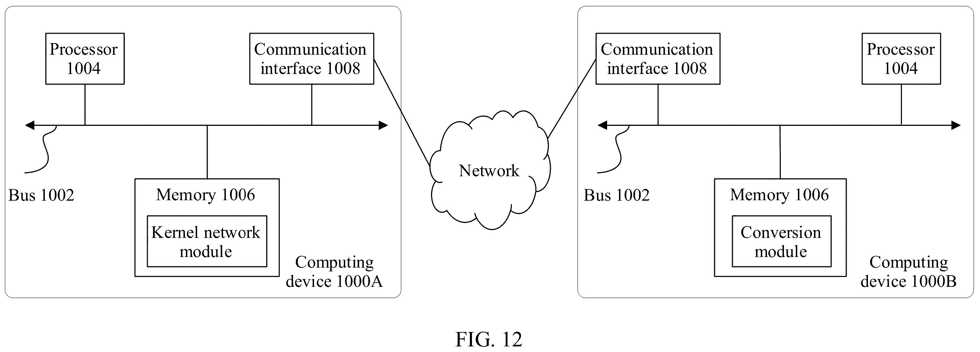

In some possible implementations, the one or more computing devices in the computing device cluster may be connected through a network. The network may be a wide area network, a local area network, or the like. FIG. 12 shows a possible implementation. As shown in FIG. 12, two computing devices 1000A and 1000B are connected through a network. Specifically, the computing devices are connected to the network through communication interfaces in the computing devices. In such possible implementations, a memory 1006 in the computing device 1000A stores instructions for performing functions of the kernel network module. In addition, a memory 1006 in the computing device 1000B stores instructions for performing functions of the conversion module.

An embodiment of this application further provides another computing device cluster. For a connection relationship between computing devices in the computing device cluster, refer to connection manners of the computing device cluster in FIG. 11 and FIG. 12 similarly. A difference lies in that a memory 1006 in one or more computing devices 1000 in the computing device cluster may store same instructions for performing the network access method.

In some possible implementations, the memory 1006 in the one or more computing devices 1000 in the computing device cluster may alternatively separately store some instructions for performing the network access method. In other words, a combination of the one or more computing devices 1000 may jointly execute the instructions for performing the network access method.

Based on the foregoing embodiments, this application further provides a computer program. When the computer program is run on a computer, the computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. In this way, if these modifications and variations to this application fall within the scope of the claims of this application and equivalent technologies thereof, this application is also intended to include these modifications and variations.

## Claims

1. A network access method, comprising:
receiving a first socket creation request initiated by a target application in a first computing device, wherein the first socket creation request is used to request to create a socket for accessing a target application in a second computing device;
modifying a type parameter of the first socket creation request, and creating a socket based on a modified type parameter, wherein a protocol stack corresponding to the modified type parameter is the same as a protocol stack supported by the second computing device;
receiving a connection request initiated by the target application in the first computing device, wherein the connection request is used to request to establish a connection to the second computing device, and the connection request comprises a first internet protocol IP address;
modifying the first IP address in the connection request to a second IP address based on a preset address mapping relationship, wherein the first IP address belongs to a first protocol stack, and the second IP address is an IP address of the second computing device under a second protocol stack supported by the second computing device; and
establishing a connection to the second computing device based on the socket and the connection request.

2. The method according to claim 1, wherein after creating the socket based on the modified type parameter, and before receiving the connection request initiated by the target application in the first computing device, the method further comprises:
receiving an address binding request initiated by the target application in the first computing device, wherein the address binding request comprises a third IP address; modifying the third IP address in the address binding request to a fourth IP address based on the preset address mapping relationship; and binding the fourth IP address to the socket according to the address binding request, wherein the third IP address belongs to the first protocol stack, and the fourth IP address is an IP address of the first computing device under the second protocol stack; and
establishing the connection to the second computing device based on the socket and the connection request comprises:
establishing the connection to the second computing device based on the socket, the fourth IP address, and the second IP address in the connection request.

3. The method according to claim 2, wherein after receiving the address binding request initiated by the target application, and before modifying the first IP address in the address binding request to the second IP address based on the preset address mapping relationship, the method further comprises:
determining that the preset address mapping relationship comprises a mapping relationship between the first IP address and the second IP address.

4. The method according to claim 1, wherein establishing the connection to the second computing device based on the socket and the connection request comprises:
selecting a fourth IP address from a plurality of IP addresses of the first computing device, wherein the fourth IP address and the second IP address belong to a same protocol stack; and
establishing the connection to the second computing device based on the socket, the fourth IP address, and the second IP address in the connection request.

5. The method according to any one of claims 1 to 4, wherein after receiving the first socket creation request initiated by the target application, and before modifying the type parameter of the first socket creation request, the method further comprises:
determining that the target application belongs to a preset application list, wherein an application in the preset application list is an application for which network address translation is to be performed.

6. The method according to claim 5, wherein the preset application list is preconfigured by a system or is customized by a user; and
the preset address mapping relationship is preconfigured by the system or is customized by the user.

7. The method according to any one of claims 1 to 6, wherein after receiving the connection request initiated by the target application in the first computing device, and before modifying the first IP address in the connection request to the second IP address based on the preset address mapping relationship, the method further comprises:
determining that the preset address mapping relationship comprises a mapping relationship between the first IP address and the second IP address.

8. The method according to any one of claims 1 to 7, wherein after establishing the connection to the second computing device based on the socket and the connection request, the method further comprises:
performing system call processing based on the second IP address, wherein
the system call processing comprises reading a message from the second computing device and/or sending a message to the second computing device.

9. The method according to any one of claims 1 to 8, wherein the first protocol stack is an IPv4 protocol stack, and the second protocol stack is an IPv6 protocol stack; or
the first protocol stack is an IPv6 protocol stack, and the second protocol stack is an IPv4 protocol stack.

10. A network access method, comprising:
receiving a second socket creation request initiated by a target application in a second computing device, wherein the second socket creation request is used to request to create a socket for listening for a message sent by a target application in another device;
modifying a type parameter of the second socket creation request, and creating a socket based on a modified type parameter, wherein a protocol stack corresponding to the modified type parameter is the same as a protocol stack that is supported by a first computing device and that corresponds to the target application;
receiving an address binding request initiated by the target application in the second computing device, wherein the address binding request comprises a first internet protocol IP address;
modifying the first IP address in the address binding request to a second IP address based on a preset address mapping relationship, wherein the first IP address belongs to a first protocol stack, the second IP address is an IP address of the second computing device under the second protocol stack, and the second protocol stack is the protocol stack that is supported by the first computing device and that corresponds to the target application; and
binding the socket to the second IP address according to the address binding request.

11. The method according to claim 10, wherein after receiving the second socket creation request initiated by the target application in the second computing device, and before modifying the type parameter of the second socket creation request, the method further comprises:
determining that the target application belongs to a preset application list, wherein an application in the preset application list is an application for which network address translation is to be performed.

12. The method according to claim 11, wherein the preset application list is preconfigured by a system or is customized by a user; and
the preset address mapping relationship is preconfigured by the system or is customized by the user.

13. The method according to any one of claims 10 to 12, wherein after receiving the address binding request initiated by the target application in the second computing device, and before modifying the first IP address in the address binding request to the second IP address based on the preset address mapping relationship, the method further comprises:
determining that the preset address mapping relationship comprises a mapping relationship between the first IP address and the second IP address.

14. The method according to any one of claims 10 to 13, wherein after binding the socket to the second IP address according to the address binding request, the method further comprises:
performing system call processing based on the second IP address, wherein
the system call processing comprises reading a message from the first computing device and/or sending a message to the first computing device.

15. The method according to any one of claims 10 to 14, wherein the first protocol stack is an IPv4 protocol stack, and the second protocol stack is an IPv6 protocol stack; or
the first protocol stack is an IPv6 protocol stack, and the second protocol stack is an IPv4 protocol stack.

16. A network access method, comprising:
receiving a first socket creation request initiated by a target application in a first computing device, wherein the first socket creation request is used to request to create a socket for accessing a target application in a second computing device;
creating a first socket according to the first socket creation request;
receiving a connection request initiated by the target application in the first computing device, wherein the connection request is used to request to establish a connection to the second computing device, the connection request comprises a first internet protocol IP address, and the first IP address belongs to a first protocol stack;
determining that a preset address mapping relationship comprises a mapping relationship between the first IP address and a second IP address, wherein the second IP address is an IP address of the second computing device under a second protocol stack supported by the second computing device;
closing the first socket, and generating a third socket creation request, wherein an index of the third socket creation request is the same as an index of the first socket creation request, a type parameter of the third socket creation request is different from a type parameter of the first socket creation request, and a protocol stack corresponding to the type parameter of the third socket creation request is the same as a protocol stack supported by the second computing device;
creating a second socket according to the third socket creation request;
modifying the first IP address in the connection request to the second IP address based on the preset address mapping relationship, wherein a protocol stack to which the second IP address belongs is the same as the protocol stack supported by the second computing device; and
establishing a connection to the second computing device based on the second socket and the connection request.

17. The method according to claim 16, wherein before generating the third socket creation request, the method further comprises:
determining that the target application belongs to a preset application list, wherein an application in the preset application list is an application for which network address translation is to be performed.

18. The method according to claim 17, wherein the preset application list is preconfigured by a system or is customized by a user; and
the preset address mapping relationship is preconfigured by the system or is customized by the user.

19. The method according to any one of claims 16 to 18, wherein after establishing the connection to the second computing device based on the second socket and the connection request, the method further comprises:
performing system call processing based on the second IP address, wherein
the system call processing comprises reading a message from the second computing device and/or sending a message to the second computing device.

20. The method according to any one of claims 16 to 19, wherein generating the third socket creation request comprises:
sequentially generating socket creation requests according to an index order until the third socket creation request is generated.

21. A computing device, comprising:
a kernel network module, configured to receive a first socket creation request initiated by a target application, wherein the first socket creation request is used to request to create a socket for accessing a target application in a second computing device; and
a conversion module, configured to modify a type parameter of the first socket creation request, wherein a protocol stack corresponding to a modified type parameter is the same as a protocol stack supported by the second computing device, wherein
the kernel network module is further configured to: create a socket based on the modified type parameter; and receive a connection request initiated by the target application, wherein the connection request is used to request to establish a connection to the second computing device, the connection request comprises a first internet protocol IP address, and the first IP address belongs to a first protocol stack;
the conversion module is further configured to modify the first IP address in the connection request to a second IP address based on a preset address mapping relationship, wherein the second IP address is an IP address of the second computing device under a second protocol stack supported by the second computing device; and
the kernel network module is further configured to establish a connection to the second computing device based on the socket and the connection request.

22. The device according to claim 21, wherein
the kernel network module is further configured to: after creating the socket based on the modified type parameter, and before receiving the connection request initiated by the target application, receive an address binding request initiated by the target application, wherein the address binding request comprises a third IP address, and the third IP address belongs to the first protocol stack;
the conversion module is further configured to modify the third IP address in the address binding request to a fourth IP address based on the preset address mapping relationship, wherein the fourth IP address is an IP address of the first computing device under the second protocol stack;
the kernel network module is further configured to bind the fourth IP address to the socket according to the address binding request; and
when establishing the connection to the second computing device based on the socket and the connection request, the kernel network module is specifically configured to:
establish the connection to the second computing device based on the socket, the fourth IP address, and the second IP address in the connection request.

23. The device according to claim 22, wherein the conversion module is further configured to:
after receiving the address binding request initiated by the target application, and before modifying the third IP address in the address binding request to the fourth IP address based on the preset address mapping relationship, determine that the preset address mapping relationship comprises a mapping relationship between the third IP address and the fourth IP address.

24. The device according to claim 21, wherein the kernel network module is specifically configured to:
select a fourth IP address from a plurality of IP addresses of the computing device, wherein the fourth **IP** address and the second IP address belong to a same protocol stack; and
establish the connection to the second computing device based on the socket, the fourth IP address, and the second IP address in the connection request.

25. The device according to any one of claims 22 to 24, wherein the conversion module is further configured to:
after receiving the first socket creation request initiated by the target application, and before modifying the type parameter of the first socket creation request, determine that the target application belongs to a preset application list, wherein an application in the preset application list is an application for which network address translation is to be performed.

26. The device according to any one of claims 21 to 25, wherein the conversion module is further configured to:
after receiving the connection request initiated by the target application, and before modifying the first IP address in the connection request to the second IP address based on the preset address mapping relationship, determine that the preset address mapping relationship comprises a mapping relationship between the first IP address and the second IP address.

27. The device according to any one of claims 21 to 26, wherein the kernel network module is further configured to:
after establishing the connection to the second computing device based on the socket and the connection request, perform system call processing based on the second IP address, wherein
the system call processing comprises reading a message from the second computing device and/or sending a message to the second computing device.

28. A computing device, comprising:
a kernel network module, configured to receive a second socket creation request initiated by a target application, wherein the second socket creation request is used to request to create a socket for listening for a message sent by a target application in another device; and
a conversion module, configured to modify a type parameter of the second socket creation request, wherein a protocol stack corresponding to a modified type parameter is the same as a protocol stack supported by a first computing device, wherein
the kernel network module is further configured to: create a socket based on the modified type parameter; and receive an address binding request initiated by the target application, wherein the address binding request comprises a first server internet protocol IP address;
the conversion module is further configured to modify the first IP address in the address binding request to a second IP address based on a preset address mapping relationship, wherein the first IP address belongs to a first protocol stack, the second IP address is an IP address of the second computing device under the second protocol stack, and the second protocol stack is the protocol stack that is supported by the first computing device and that corresponds to the target application; and
the kernel network module is further configured to bind the socket to the second IP address according to the address binding request.

29. The device according to claim 28, wherein the kernel network module is further configured to:
after receiving the second socket creation request initiated by the target application, and before modifying the type parameter of the second socket creation request, determine that the target application belongs to a preset application list, wherein an application in the preset application list is an application for which network address translation is to be performed.

30. The device according to claim 28 or 29, wherein the conversion module is further configured to:
after receiving the address binding request initiated by the target application, and before modifying the first IP address in the address binding request to the second IP address based on the preset address mapping relationship, determine that the preset address mapping relationship comprises a mapping relationship between the first IP address and the second IP address.

31. The device according to any one of claims 28 to 30, wherein the kernel network module is further configured to:
after binding the socket to the second IP address according to the address binding request, perform system call processing based on the second IP address, wherein
the system call processing comprises reading a message from the first computing device and/or sending a message to the first computing device.

32. A computing device, comprising:
a kernel network module, configured to: receive a first socket creation request initiated by a target application, wherein the first socket creation request is used to request to create a socket for accessing a target application in a second computing device; create a first socket according to the first socket creation request; receive a connection request initiated by the target application, wherein the connection request is used to request to establish a connection to the second computing device, the connection request comprises a first server internet protocol IP address, and the first IP address belongs to a first protocol stack; determine that a preset address mapping relationship comprises a mapping relationship between the first IP address and a second IP address, wherein the second IP address is an IP address of the second computing device under a second protocol stack supported by the second computing device; close the first socket, and generate a third socket creation request, wherein an index of the third socket creation request is the same as an index of the first socket creation request, a type parameter of the third socket creation request is different from a type parameter of the first socket creation request, and a protocol stack corresponding to the type parameter of the third socket creation request is the same as a protocol stack supported by the second computing device; and create a second socket according to the third socket creation request; and
a conversion module, configured to modify the first IP address in the connection request to the second IP address based on the preset address mapping relationship, wherein a protocol stack to which the second IP address belongs is the same as the protocol stack supported by the second computing device, wherein
the kernel network module is further configured to establish a connection to the second computing device based on the second socket and the connection request.

33. The device according to claim 32, wherein the conversion module is further configured to:
before generating the third socket creation request, determine that the target application belongs to a preset application list, wherein an application in the preset application list is an application for which network address translation is to be performed.

34. The device according to claim 32 or 33, wherein the kernel network module is further configured to:
after establishing the connection to the second computing device based on the second socket and the connection request, perform system call processing based on the second IP address, wherein
the system call processing comprises reading a message from the second computing device and/or sending a message to the second computing device.

35. The device according to any one of claims 32 to 34, wherein the kernel network module is specifically configured to:
sequentially generate socket creation requests according to an index order until the third socket creation request is generated.

36. A computing device, comprising a processor and a memory, wherein
the processor is configured to execute instructions stored in the memory, so that the computing device performs the method according to any one of claims 1 to 9, or performs the method according to any one of claims 10 to 15, or performs the method according to any one of claims 16 to 20.

37. A computing device cluster, comprising at least one computing device, wherein each computing device comprises a processor and a memory; and
the processor of the at least one computing device is configured to execute instructions stored in the memory of the at least one computing device, so that the computing device cluster performs the method according to any one of claims 1 to 9, or performs the method according to any one of claims 10 to 15, or performs the method according to any one of claims 16 to 20.

38. A computer program product comprising instructions, wherein when the instructions are run by a computing device, the computing device performs the method according to any one of claims 1 to 9, or performs the method according to any one of claims 10 to 15, or performs the method according to any one of claims 16 to 20.

39. A computer-readable storage medium, comprising computer program instructions, wherein when the computer program instructions are executed by a computing device, the computing device performs the method according to any one of claims 1 to 9, or performs the method according to any one of claims 10 to 15, or performs the method according to any one of claims 16 to 20.
